# EUROPÄISCHE PATENTSCHRIFT

(11) **EP 2 961 644 B1**
(45) Veröffentlichungstag und Bekanntmachung des Hinweises auf die Patenterteilung: **10.04.2019**
(21) Anmeldenummer: 14706006.5
(22) Anmeldetag: 19.02.2014
(51) Int. Cl.: B60W 30/095, B60W 40/02, B60W 50/00, G05D 1/02, G06K 9/00, B60W 50/06

(54) **GRIDBASIERTE VORHERSAGE DER POSITION EINES OBJEKTES**
GRID-BASED PREDICTION OF THE POSITION OF AN OBJECT
ESTIMATION BASÉE SUR UNE GRILLE DE LA POSITION D'UN OBJET

(30) Priorität: 27.02.2013 DE 102013203239
(43) Veröffentlichungstag der Anmeldung: 06.01.2016
(73) Patentinhaber: Bayerische Motoren Werke Aktiengesellschaft, 80809 München (DE)
(72) Erfinder: AEBERHARD, Michael, 80805 München (DE); FRIEDL, Martin, 82237 Wörthsee (DE); KLÖDEN, Horst, 80797 München (DE)
(86) Internationale Anmeldenummer: PCT/EP2014/053203
(87) Internationale Veröffentlichungsnummer: WO 2014/131666

(56) Entgegenhaltungen:
- EP-A1- 1 927 866
- DE-A1- 19 905 284
- DE-A1-102009 006 113
- US-A1- 2010 100 325

## Beschreibung

Die Erfindung betrifft Verfahren zur Vorhersage der Position eines Objekts im Umfeld eines Fahrzeugs, sowie eine entsprechende Vorrichtung und ein entsprechendes Computerprogramm.

Fahrzeuge, insbesondere PKW oder LKW, werden in Zukunft häufiger mit komplexen Fahrerassistenzsystemen ausgestattet sein, die den Fahrer bei seiner Fahraufgabe unterstützen. Hierzu ist es erforderlich, dass den Fahrerassistenzsystemen Modelle des Umfelds zur Verfügung stehen. Im Bereich der Fahrzeug-Umfelderfassung ist es bekannt, die Umgebung eines Fahrzeugs, also das Umfeld, durch ein Raster, auch Grid genannt, zu repräsentieren. Eine Zelle des Rasters repräsentiert dabei einen entsprechenden Abschnitt des Umfelds des Fahrzeugs.

Mithilfe von Sensorik wird das Umfeld eines Fahrzeugs abgetastet und für jeden durch eine Zelle repräsentierten Abschnitt eine Wahrscheinlichkeit errechnet, dass dieser Bereich durch ein Hindernis, anders ausgedrückt ein Objekt, belegt ist. Das dabei entstehende Resultat wird auch als Occupancy Grid bezeichnet. Ein Occupancy Grid gibt eine Momentaufnahme der Objekte im Umfeld wieder und kann somit als statisch bezeichnet werden.

In dem Vortrag "Credibilistic Occupancy Grids for Vehicle Preception in Dynamic Environments", IEEE International Conference on Robotics and Automation, Shanghai, China, Mai 2011 sind Ansätze vorgestellt worden, auch Höheninformationen von Objekten für jeden durch eine Zelle repräsentierten Abschnitt des Umfelds zu erfassen.

Um Vorhersagen über zukünftige Positionen von Objekten im Umfeld eines Fahrzeugs zu treffen, sind Bewegungsmodelle eingesetzt worden. In diesen wird die zukünftige Position dadurch vorhergesagt, dass angenommen wird, dass eine Bewegungseigenschaft des Objektes über eine bestimmte Zeit konstant bleibt. So kann zum Beispiel angenommen werden, dass die erkannte Geschwindigkeit, Beschleunigung oder Drehrate eines Objektes über eine gewisse Zeit konstant bleibt. Auf dieser Basis wird dann die zukünftige Position errechnet.

Ein weiterer Ansatz zur Vorhersage von zukünftigen Positionen ist die Verwendung von Trajektorien. Eine Trajektorie gibt dabei die Positionen eines Objektes zu mehreren zukünftigen Zeitpunkten an. Ansätze dieses Verfahrens sind beispielsweise in der Dissertation "Ein neues Konzept für die Trajektoriengenerierung und - stabilisierung in zeitkritischen Verkehrszenarien" von Werling, M., Karlsruher Institut für Technologie, 2010 beschrieben.

Die Vorhersage basierend auf Bewegungsmodellen unterliegt dem Nachteil, dass die Vorhersagen keine unterschiedlichen Hypothesen zum weiteren Verhalten oder Handeln des Objektes (Abbiegen, Geradeausfahren) berücksichtigen können. Gerade bei Fußgängern wird dies deutlich, die schnell und unvermittelt anhalten, loslaufen und abbiegen können und wenig Beschränkungen hinsichtlich des möglichen Weges unterliegen, da sie nicht an Fahrstreifen gebunden sind.

Die Vorhersage von zukünftigen Positionen unter Verwendung von Trajektorien kann unterschiedliche Hypothesen zum weiteren Verhalten oder der Absicht eines Objektes berücksichtigen. Gerade bei Fußgängern stößt die Einsatzmöglichkeit von Trajektorienverfahren allerdings an Grenzen. Da Fußgänger wie bereits ausgeführt schnell ihre Laufrichtung ändern können und auch wenig Einschränkungen hinsichtlich ihres Weges unterliegen müssen bei der Vorhersage der zukünftigen Position eine Vielzahl an Hypothesen zum weiteren Verhalten berücksichtigt werden und eine Vielzahl an Trajektorien berechnet werden. Dieser Rechenaufwand kann zumindest derzeit nicht in der für Fahrerassistenzsysteme nötigen Echtzeit bereitgestellt werden. Darüber hinaus kann auch die Verarbeitung und Auswertung der Vielzahl von Trajektorien durch Fahrerassistenzsysteme aufgrund des Rechenaufwandes nicht den Echtzeitanforderungen genügend ausgeführt werden.

Die Druckschrift US 2010/0100325 A1 offenbart ein Verfahren zum Übertragen von Daten zwischen einem Objekterfassungssystem und einem Kollisionsverarbeitungsschaltkreis. Das Objekterfassungssystem beinhaltetet Sensoren zum Erfassen von Bewegungen innerhalb eines vorbestimmten Bereiches. Es umfasst ferner eine Pfadvorhersage, um den Ort von erfassten Objekten vorherzusagen.

Aufgabe an den Fachmann ist es deshalb ein Verfahren zur Vorhersage der zukünftigen Position von Objekten bereitzustellen, das den Echtzeitanforderungen von Fahrerassistenzsystemen von Fahrzeugen genügt, insbesondere für Positionsvorhersagen von Fußgängern.

Die Aufgabe wird durch ein Verfahren nach Anspruch 1 und 11, sowie eine Vorrichtung nach Anspruch 14 und ein Computerprogramm nach Anspruch 15. Vorteilhafte Weiterbildungen sind in den abhängigen Ansprüchen definiert.

In einem ersten Aspekt der Erfindung umfasst ein Verfahren zur Vorhersage der Position eines Objekts im Umfeld eines Fahrzeugs die im Anspruch 1 angegebenen Merkmale, nämlich: Bereitstellen eines ersten Rasters, umfassend Zellen, die jeweils einen Abschnitt des Umfelds repräsentieren; Bestimmen der Wahrscheinlichkeit für jede Zelle des ersten Rasters, dass sich das Objekt oder ein Teil davon in dem Abschnitt des Umfelds befindet, der durch die jeweilige Zelle repräsentiert wird; Bereitstellen eines zweiten Rasters, umfassend Zellen, die jeweils einen Abschnitt des Umfelds repräsentieren; Bestimmen der Wahrscheinlichkeit für jede Zelle des zweiten Rasters, dass sich das Objekt oder ein Teil davon zu einem vorbestimmten Zeitpunkt in der Zukunft in dem Abschnitt des Umfelds befinden wird, der durch die jeweilige Zelle repräsentiert wird. Die Wahrscheinlichkeit, dass sich das Objekt oder ein Teil davon in dem Abschnitt des Umfelds befindet wird kann auch als Belegungswahrscheinlichkeit der entsprechenden Zelle bezeichnet werden. Das Objekt wird im Folgenden auch "erstes" Objekt genannt.

Aufgrund der Verwendung eines Rasters, in dem für jede Zelle die Belegungswahrscheinlichkeit bestimmt wird, können verschiedene Hypothesen zum weiteren Bewegungsverlauf eines Objektes auf einfache Art berücksichtigt werden. Es wird also die Berücksichtigung von verschiedenen Verhaltensmöglichkeiten eines Objektes ermöglicht, ohne dass jedes Verhalten separat beschrieben werden muss. Hierzu werden die Wahrscheinlichkeiten für jede Zelle derart gewählt, dass verschiedene Hypothesen gemeinsam berücksichtigt werden. Diese gesammelte Berücksichtigung von Hypothesen erfordert einen geringeren Rechenaufwand als Einzelberechnungen für jede einzelne Hypothese und anschließende Summation oder Speicherung. Des Weiteren wird der Rechenaufwand durch die Betrachtung diskreter Aufenthaltsräume, also den Abschnitten des Umfelds, verringert. Dies insbesondere im Vergleich zu der Berechnung vollständiger Trajektorien für jede Hypothese.

Die gesammelte Berücksichtigung von Hypothesen kann sich bei der Bestimmung der Wahrscheinlichkeiten darin widerspiegeln, dass beispielsweise für einen Fußgänger eine bestimmte Verteilung, beispielsweise eine Gleichverteilung, für die Richtungswahl der zukünftigen Laufrichtung gewählt wird. Jeder an die Ausgangszelte des Fußgängers (oder allgemeiner des Objekts) angrenzenden Zelle wird so dieselbe Wahrscheinlichkeit zugewiesen unter Berücksichtigung der Zeitspanne und der Laufgeschwindigkeit, für die die Vorhersage erstellt wird. Diese Zuweisung von Wahrscheinlichkeiten kann durch die Belegung von Zellen (beziehungsweise den durch sie repräsentierten Abschnitten des Umfelds) durch andere Objekte, wie beispielsweise parkende Fahrzeuge, beeinflusst werden. So ist beispielsweise davon auszugehen, dass ein Fußgänger sich nicht in einem Abschnitt des Umfelds aufhalten wird, der durch ein parkendes Fahrzeug belegt wird. Die Belegungswahrscheinlichkeit für die entsprechende Zelle wird somit auf Null gesetzt. Auf diese Weise können auch allgemeine Hindernisse wie Häuser, Fahrbahnränder, etc. berücksichtigt werden.

Die im Umfeld erkannten Objekte können weiterhin mit semantischen Informationen hinterlegt werden. Beispielsweise kann ein Fußgängerüberweg mit der Information belegt werden, dass ein Fußgänger hier wahrscheinlicher die Straße überqueren wird, als an einer Stelle direkt neben dem Fußgängerüberweg. Die Berechnung der Belegungswahrscheinlichkeiten lässt sich so aus allgemeinen Regeln ableiten. Diese allgemeinen Regeln betreffen die zukünftige Aufenthaltswahrscheinlichkeit des Objektes in Abhängigkeit von der Zeit und die Modifikation, die diese Aufenthaltswahrscheinlichkeit durch andere Objekte erfährt, wobei auch semantische Informationen berücksichtigt werden können. Es kann auch vorgesehen sein, die Dynamik anderer Objekte zu berücksichtigen.

Mit anderen Worten: Das Bestimmen der Wahrscheinlichkeit für jede Zelle des zweiten Rasters berücksichtigt eines oder mehrere der Folgenden: Die bisherige Bewegung des Objektes; andere Objekte im Umfeld des Fahrzeugs und gegebenenfalls deren vorhergesagte Bewegung; semantische Informationen von anderen Objekten im Umfeld des Fahrzeugs. Zur Bestimmung der Wahrscheinlichkeit kann es vorgesehen sein, das Objekt zu klassifizieren, ihm also eine bestimmte Kategorie eines Verkehrsteilnehmers zuzuordnen, beispielsweise Fußgänger, Fahrradfahrer, Fahrzeug, Lastkraftwagen, etc.

In dem ersten und zweiten Raster können Objekte und Belegungswahrscheinlichkeiten, die für ein Occupancy Grid erzeugt wurden, auf das erste und zweite Raster übertragen werden. Schnittstellen, die von Funktionen oder Fahrerassistenzsystemen bereitgestellt werden, die auf Raster ausgelegt sind, wie einem Occupancy Grid, sind somit zumindest generell auch für Eingaben des zweiten Rasters vorbereitet. Für Occupancy Grids bestehende Schnittstellen können so vorteilhaft angepasst, erweitert oder sogar direkt wiederverwendet werden. Es kann vorgesehen sein, ein bestehendes Occupancy Grid um die Informationen aus dem zweiten Raster und dessen Belegungswahrscheinlichkeiten zu erweitern. Das entstehende Occupancy Grid würde dann die Vorhersage über die Position des Objektes in der Zukunft (gegebenenfalls auch für mehrere Zeitpunkte in der Zukunft wie weiter unten noch erläutert wird) in einem größeren Kontext präsentieren.

Die Vereinigung des Occupancy Grids (mit seinen Informationen zu statischen Objekten beziehungsweise deren Belegungswahrscheinlichkeiten) und der Vorhersage für die Belegungswahrscheinlichkeiten des Objektes ermöglicht eine besser Generierung von Trajektorien für das eigene Fahrzeug. Solche Trajektorien, die das aktuelle Umfeld sowie das vorhergesagte Umfeld (also die vorhergesagte Position bzw. Belegungswahrscheinlichkeiten) berücksichtigen, können für Fahrerassistenzfunktionen und hochautomatisiertes Fahren relevant sein.

Das erste und das zweite Raster müssen nicht zwingenderweise auch das Fahrzeug mit umfassen, sondern können auf das Objekt ausgerichtet sein. Dabei kann die Größe des Rasters aufgrund der maximalen Entfernung, die das Objekt bis zu dem vorbestimmten Zeitpunkt in der Zukunft zurücklegen kann, gewählt werden. Diese Raster können Situationsraster genannt werden, da sie für die Vorhersagesituation gewählt werden. Vorteilhafterweise kann dabei vorgesehen sein das Situationsraster so zu wählen, dass es sich in ein bestehendes Occupancy Grid einfügt beziehungsweise mit diesem bezüglich der Zellen kompatibel überlappt. Dies bedeutet insbesondere, dass jeweils ein Abschnitt des Umfelds, der durch eine Zelle des Situationsrasters repräsentiert wird mit einem Abschnitt des Umfelds, der durch eine Zelle im Occupancy Grid repräsentiert wird, übereinstimmt. Darüber hinaus kann durchaus vorgesehen sein, dass die Abschnitte des Umfelds, die durch die Zellen des Situationsrasters repräsentiert werden, kleiner sind, als die des Occupancy Grids, und gegebenenfalls die Kanten der Abschnitte des Occupancy Grids bündig mit den Kanten der Abschnitte des Situationsrasters liegen und damit ein Subraster erzeugt wird.

Der vorbestimmte Zeitpunkt in der Zukunft kann beispielsweise 0,5 s; 1 s, 1,5 s oder 2 s in der Zukunft liegen.

In einer Weiterbildung kann das Verfahren ferner umfassen: Bereitstellen einer Gruppe weiterer Raster, jeweils umfassend Zellen, die jeweils einen Abschnitt des Umfelds repräsentieren; Zuordnen jeweils eines Zeitpunkts in der Zukunft zu jedem Raster der Gruppe weiterer Raster; Für jedes Raster der Gruppe weiterer Raster: Bestimmen der Wahrscheinlichkeit für jede Zelle des jeweiligen Rasters, dass sich das Objekt oder ein Teil davon zu dem jeweils zugeordneten Zeitpunkt in dem Abschnitt des Umfelds befinden wird, der durch die jeweilige Zelle repräsentiert wird.

Durch diese Weiterbildung wird eine Vorhersage für mehrere Zeitpunkte in der Zukunft getroffen, wobei für jeden Zeitpunkt ein eigenes Raster vorgesehen ist. Die Zeitpunkte in der Zukunft können regelmäßig verteilt sein, beispielsweise alle 0,5 s.

In einer anderen Weiterbildung umfasst das Verfahren zusätzlich zur Vorhersage der Position eines weiteren Objekts im Umfeld eines Fahrzeugs, ferner: Bereitstellen eines weiteren ersten Rasters, umfassend Zellen, die jeweils einen Abschnitt des Umfelds repräsentieren; Bestimmen der Wahrscheinlichkeit für jede Zelle des weiteren ersten Rasters, dass sich das weitere Objekt oder ein Teil davon in dem Abschnitt des Umfelds befindet, der durch die jeweilige Zelle repräsentiert wird; Bereitstellen eines weiteren zweiten Rasters, umfassend Zellen, die jeweils einen Abschnitt des Umfelds repräsentieren; Bestimmen der Wahrscheinlichkeit für jede Zelle des weiteren zweiten Rasters, dass sich das weitere Objekt oder ein Teil davon zu einem vorbestimmten Zeitpunkt in der Zukunft in dem Abschnitt des Umfelds befinden wird, der durch die jeweilige Zelle repräsentiert wird.

In dieser Weiterbildung wird die Vorhersage der Position auf ein weiteres Objekt ausgedehnt, also beispielsweise einen zweiten Fußgänger. Für dieses weitere Objekt wird ein neuer Satz von Rastern angelegt: Ein Raster für die aktuelle Position und eines für die Vorhersage. Die Raster für das zweite Objekt sind unabhängig von den Rastern für das "erste" Objekt. Die Vorhersage kann dabei ähnlich wie bereits für das erste Objekt ausgeführt berechnet werden.

Falls darüber hinaus weitere Objekte beobachtet werden sollen und für diese Vorhersagen erstellt werden sollen, kann für jedes weitere Objekt ein eigener Satz Raster bereitgestellt werden. Für jedes Objekt wird dann eine Vorhersage entsprechend dem für das "erste" Objekt aufgezeigten Schema erstellt.

Auch in diesem Verfahren zur zusätzlichen Vorhersage der Position des zweiten Objektes kann das Bestimmen der Wahrscheinlichkeit für jede Zelle des weiteren zweiten Rasters eines oder mehrere der Folgenden berücksichtigen: die bisherige Bewegung des weiteren Objektes; andere Objekte im Umfeld des Fahrzeugs und deren vorhergesagte Bewegung; semantische Informationen von anderen Objekten im Umfeld des Fahrzeugs.

In einer Weiterbildung des Verfahrens zum zusätzlichen Vorhersagen der Position eines weiteren Objektes kann Folgendes vorgesehen sein: Bereitstellen einer zweiten Gruppe weiterer Raster, jeweils umfassend Zellen, die jeweils einen Abschnitt des Umfelds repräsentieren; Zuordnen jeweils eines Zeitpunkts in der Zukunft zu jedem Raster der zweiten Gruppe weiterer Raster; Für jedes Raster der zweiten Gruppe weiterer Raster: Bestimmen der Wahrscheinlichkeit für jede Zelle des jeweiligen Rasters, dass sich das weitere Objekt oder ein Teil davon zu dem jeweils zugeordneten Zeitpunkt in dem Abschnitt des Umfelds befinden wird, der durch die jeweilige Zelle repräsentiert wird. In dieser Weiterbildung wird also für das weitere Objekt die Position zu mehreren Zeitpunkten in der Zukunft vorhergesagt, ähnlich der Vorhersage der Position für mehrere Zeitpunkte für das "erste" Objekt. Für jede Vorhersage für das weitere Objekt wird ein eigenes Raster bereitgestellt.

Alternativ zur oben dargestellten Vorhersage der Position eines weiteren Objektes kann ein Verfahren Folgendes umfassen: Bestimmen der Wahrscheinlichkeit für jede Zelle des ersten Rasters, dass sich das weitere Objekt oder ein Teil davon in dem Abschnitt des Umfelds befindet, der durch die jeweilige Zelle repräsentiert wird; Bestimmen der Wahrscheinlichkeit für jede Zelle des zweiten Rasters, dass sich das weitere Objekt oder ein Teil davon zu einem vorbestimmten Zeitpunkt in der Zukunft in dem Abschnitt des Umfelds befinden wird, der durch die jeweilige Zelle repräsentiert wird. In dieser Weiterbildung wird das weitere Objekt in demselben ersten und zweiten Raster durch Wahrscheinlichkeiten repräsentiert wie das "erste" Objekt. Beide Objekte sind somit im selben Satz Raster repräsentiert. Dabei kann es vorkommen, dass für beide Objekte eine Aufenthaltswahrscheinlichkeit größer Null für den durch dieselbe Zelle repräsentierten Abschnitt des Umfelds bestimmt wird. In diesem Fall kann eine gemeinsame Wahrscheinlichkeit angegeben werden, dass der Abschnitt des Umfelds, den die Zelle repräsentiert, belegt ist, unabhängig davon, ob sie von dem "ersten" Objekt oder dem weiteren Objekt belegt ist. Ebenso könnten Aufenthaltswahrscheinlichkeiten getrennt für das erste und das zweite Objekt für jeden Abschnitt des Umfelds, der durch eine Zelle repräsentiert wird, angegeben werden. Die Größe des ersten und zweiten Rasters kann derart gewählt werden, dass die maximale Entfernung berücksichtigt wird, die das "erste" und das weitere Objekt bis zum Zeitpunkt in der Zukunft zurücklegen können. Genauso kann die Größe des ersten und zweiten Rasters derart gewählt werden, dass sie das gesamte nähere Umfeld des Fahrzeugs abdecken und gegebenenfalls mit einem bereits vorhandenen Occupancy Grid übereinstimmt.

Es kann vorgesehen sein, dass das weitere Objekt nur dann in demselben ersten und zweiten Raster repräsentiert wird, wenn das weitere Objekt derselben Klasse von Verkehrsteilnehmern angehört wie das "erste" Objekt. Klassen von Verkehrsteilnehmern können sein: Fußgänger, Radfahrer, Kraftfahrzeug, PKW oder LKW.

Es kann vorgesehen sein, dass das Bestimmen der Wahrscheinlichkeit für jede Zelle des zweiten Rasters, dass sich das weitere Objekt oder ein Teil davon zu einem vorbestimmten Zeitpunkt in der Zukunft in dem Abschnitt des Umfelds befinden wird eines oder mehrere der Folgenden berücksichtigt: Die bisherige Bewegung des weiteren Objektes; andere Objekte im Umfeld des Fahrzeugs und deren vorhergesagte Bewegung; semantische Informationen von anderen Objekten im Umfeld des Fahrzeugs.

Ebenso können für das weitere Objekt Vorhersagen der Position für mehrere Zeitpunkte getroffen werden. Zu diesem Zweck setzt eine Weiterbildung auf der Vorhersage der Position des "ersten" Objektes für mehrere Zeitpunkt auf und bestimmt: Für jedes Raster der Gruppe weiterer Raster: Die Wahrscheinlichkeit für jede Zelle des jeweiligen Rasters, dass sich das weitere Objekt oder ein Teil davon zu dem jeweils zugeordneten Zeitpunkt in dem Abschnitt des Umfelds befinden wird, der durch die jeweilige Zelle repräsentiert wird.

Wenn Positionen von mehreren Objekten vorhergesagt werden sollen kann allgemein vorgesehen sein, die Objekte in Klassen von Verkehrsteilnehmern einzuordnen und für jede Klasse einen Satz an Rastern (also ein erstes und zweites Raster sowie gegebenenfalls eine Gruppe von weiteren Rastern, falls für mehrere Zeitpunkte Vorhersagen getroffen werden sollen) für die Vorhersage vorzusehen. Objekte einer Klasse werden dann in demselben ersten und zweiten Raster sowie gegebenenfalls derselben Gruppe von weiteren Rastern dargestellt.

Diese Aufteilung von unterschiedlichen Klassen von Objekten in unterschiedliche Raster bietet den Vorteil, dass Funktionen des Fahrzeugs wie Fahrerassistenzfunktionen bereits die Klasse des Objektes anhand des Rasters erfahren können und gegebenenfalls andere Eingriffe oder Möglichkeiten bereitstellen können.

Das Verfahren kann weiter umfassen: Bestimmen des Bewegungszustandes des Objektes in dem vorbestimmten Zeitpunkt in der Zukunft und/oder Bestimmen der Ausrichtung des Objektes zu dem vorbestimmten Zeitpunkt in der Zukunft für jede Zelle des zweiten Rasters. Allgemeiner ausgedrückt können für die Zellen des zweiten Rasters weitere Informationen über das Objekt für die jeweilige Zelle und für den vorbestimmten Zeitpunkt in der Zukunft bestimmt werden.

In einem anderen Aspekt der Erfindung erfolgt die Vorhersage nicht mithilfe verschiedener Raster. Stattdessen wird jeder Zelle ein Vektor zugewiesen. Die Elemente dieses Vektors stellen die Wahrscheinlichkeiten der Belegung für unterschiedliche Zeitpunkte dar. In diesem anderen Aspekt der Erfindung umfasst ein Verfahren zur Vorhersage der Position eines Objekts im Umfeld eines Fahrzeugs die im Anspruch 11 angegebenen Merkmale, nämlich: Bereitstellen eines Rasters, umfassend Zellen, die jeweils einen Abschnitt des Umfelds repräsentieren; Bestimmen der aktuellen Wahrscheinlichkeit für jede Zelle des Rasters, dass sich das Objekt oder ein Teil davon in dem Abschnitt des Umfelds befindet, der durch die jeweilige Zelle repräsentiert wird; Bestimmen der zukünftigen Wahrscheinlichkeit für jede Zelle des Rasters, dass sich das Objekt oder ein Teil davon zu einem vorbestimmten Zeitpunkt in der Zukunft in dem Abschnitt des Umfelds befinden wird, der durch die jeweilige Zelle repräsentiert wird; Für mindestens eine Zelle des Rasters: Bereitstellen eines Vektors, der die aktuelle Wahrscheinlichkeit und die zukünftige Wahrscheinlichkeit als Elemente enthält.

Aufgrund der Verwendung eines Rasters, in dem für jede Zelle die Belegungswahrscheinlichkeit bestimmt wird, können verschiedene Hypothesen zum weiteren Bewegungsverlauf eines Objektes auf einfache Art berücksichtigt werden. Es wird also die Berücksichtigung von verschiedenen Verhaltensmöglichkeiten eines Objektes ermöglicht, ohne dass jedes Verhalten separat beschrieben werden muss. Hierzu werden die Wahrscheinlichkeiten für jede Zelle derart gewählt, dass verschiedene Hypothesen gemeinsam berücksichtigt werden. Diese gesammelte Berücksichtigung von Hypothesen erfordert einen geringeren Rechenaufwand als Einzeiberechnungen für jede einzelne Hypothese und anschließende Summation oder Speicherung. Des Weiteren wird der Rechenaufwand durch die Betrachtung diskreter Aufenthaltsräume, also den Abschnitten des Umfelds, verringert. Dies insbesondere im Vergleich zu der Berechnung vollständiger Trajektorien für jede Hypothese.

Die Bestimmung der Belegung jeder Zelle kann mithilfe der oben genannten Weiterbildungen oder Verfahren erreicht werden.

In einer Weiterbildung des gerade genannten Aspekts umfasst das Verfahren ferner: Prüfen, ob die zukünftige Wahrscheinlichkeit größer Null ist; wobei der Vektor die zukünftige Wahrscheinlichkeit nur dann als Element enthält, wenn die zukünftige Wahrscheinlichkeit größer Null ist. Es ist also vorgesehen einer Zelle mehrere Wahrscheinlichkeiten unter Verwendung eines Vektors nur dann zuzuordnen, wenn die zukünftigen Wahrscheinlichkeiten der Erwähnung bedürfen, beispielsweise größer Null sind.

Ein Vorteil dieser Repräsentation ist, dass die Dimension des Vektors für jede Zelle adaptiv gewählt werden kann: Ist Beispielsweise die Belegungswahrscheinlichkeit eines Objektes in einer Zelle null - so enthält der Vektor keine Elemente. Ist die Belegungswahrscheinlichkeit ab einem bestimmten Zeitpunkt gleich Null, so sind nur die Elemente bis zu diesem Zeitpunkt enthalten.

In einer weiteren Fortbildung umfasst das Verfahren ferner: Bestimmen einer Gruppe weiterer Wahrscheinlichkeiten für jede Zelle des Rasters, wobei jede Wahrscheinlichkeit der Gruppe, die Wahrscheinlichkeit angibt, dass sich das Objekt oder ein Teil davon zu einem Zeitpunkt aus einer Gruppe von Zeitpunkten in der Zukunft in dem Abschnitt des Umfelds befinden wird, der durch die jeweilige Zelle repräsentiert wird; Für mindestens eine Zelle des Rasters: Bereitstellen eines Vektors, der zusätzlich die weiteren Wahrscheinlichkeiten enthält.

Somit wird für jede Zelle für vorbestimmte Zeitpunkte in der Zukunft die Belegungswahrscheinlichkeit bestimmt. Die vorbestimmten Zeitpunkte (also die Gruppe von Zeitpunkten) sind für jede Zelle dieselben.

In einem weiteren Aspekt der Erfindung umfasst eine Vorrichtung eine elektronische Recheneinheit, wobei die Vorrichtung dazu eingerichtet ist, eines der obenstehenden Verfahren auszuführen. Die elektronische Recheneinheit kann ein Computer, ein Mikrocontroller oder ähnliches sein. Darüber hinaus kann die Vorrichtung über geeignete Schnittstellen verfügen, um die notwendigen Daten mit Sensoren oder Fahrerassistenzfunktionen auszutauschen. Diese Schnittstellen sind im Stand der Technik bekannt. Die elektronische Recheneinheit kann durch ein Programm, also Software, zur Ausführung eines der Verfahren eingerichtet werden.

In einem anderen Aspekt der Erfindung umfasst ein Computerprogramm Anweisungen zum Ausführen eines der oben genannten Verfahren. Die Anweisungen können einen Computer bei deren Ausführung zur Ausführung eines der oben genannten Verfahren veranlassen.

### KURZE BESCHREIBUNG DER ZEICHNUNG

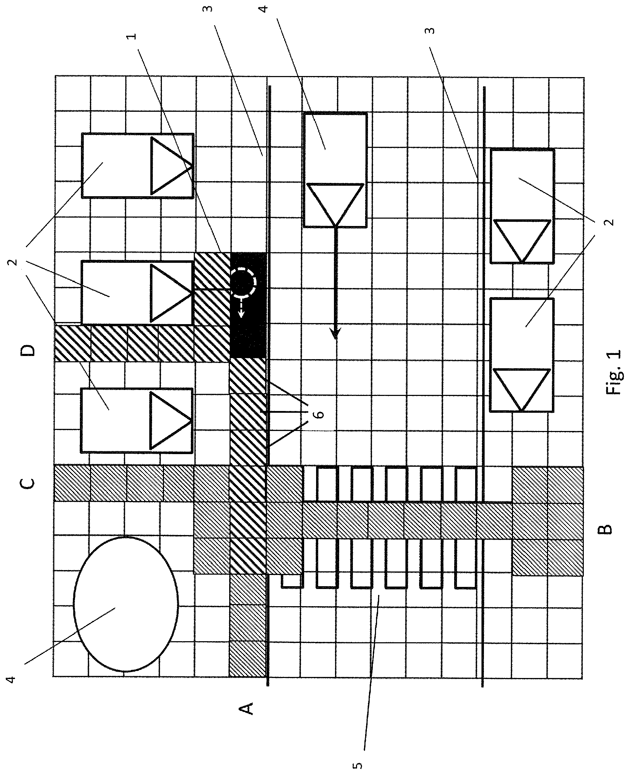

Fig. 1 zeigt ein beispielhaftes zweites Raster, das zur Erläuterung in einem schematischen Umfeld gezeigt wird, gemäß einem Ausführungsbeispiel.

### DETAILLIERTE BESCHREIBUNG DES AUSFÜHRUNGSBEISPIELS

Fig. 1 zeigt ein beispielhaftes zweites Raster, das zur Erläuterung in einem schematischen Umfeld gezeigt wird, gemäß einem Ausführungsbeispiel. Wie in Fig. 1 aus der Vogelperspektive erkenntlich ist, befindet sich ein Fußgänger 1 auf einem Fußgängerweg entlang einer Straße. Der Fußgänger 1 blickt in die durch den Pfeil angedeutete Richtung. Die Begrenzung der Straße zum Fußgängerweg ist durch Linien 3 angedeutet. In Fig. 1 oberhalb und unterhalb des Fußgängers 1 parken Fahrzeuge 2. Das zweite Raster wurde von einer elektronischen Recheneinheit in einem (Ego-)Fahrzeug 4 erstellt. In dem zweiten Raster sind die Belegungswahrscheinlichkeiten durch drei Schraffierungssstufen dargestellt. Jede Schraffierungsstufe repräsentiert dabei einen Bereich an Wahrscheinlichkeiten. Die erste Stufe beispielsweise 0 % bis 30 %, die zweite 30 % bis 60 % und die dritte Stufe 60 % bis 100 %. Je markanter eine Fläche schraffiert ist (bis zur vollständigen Ausfüllung), desto größer ist die Belegungswahrscheinlichkeit zum Zeitpunkt in der Zukunft. Die Belegungswahrscheinlichkeiten durch die statischen Objekte, also die stehenden Fahrzeuge 2 und Baumverpflanzungen 4 auf dem Gehweg sind nicht in das zweite Raster aufgenommen. Allgemein kann trotzdem vorgesehen sein, dies vorzunehmen. Die Belegungswahrscheinlichkeiten durch die Fahrzeuge 2 sind aus einem Occupancy Grid der elektronischen Recheneinheit bekannt.

Bei der Bestimmung der Wahrscheinlichkeiten, dass sich der Fußgänger 1 zu dem vorbestimmten Zeitpunkt in der Zukunft in dem Abschnitt des Umfelds befinden wird, der durch die jeweilige Zelle repräsentiert wird, wird die Belegung anderer Abschnitte durch Objekte berücksichtigt. Es wird davon ausgegangen, dass der Fußgänger 1 nicht in belegte Abschnitte des Umfelds laufen wird. Dies ist beispielsweise darin ersichtlich, dass der Weg zum Punkt D zwischen den parkenden Fahrzeugen hindurch führt und keine Belegungswahrscheinlichkeiten angegeben sind für die Zeilen, die durch die Fahrzeuge 2 belegt sind.

Des Weiteren werden bei der Bestimmung der Wahrscheinlichkeiten semantische Informationen berücksichtigt. So wird berücksichtigt, dass sich der Fußgänger 1 auf einem Gehweg befindet, und deshalb nicht auf die Straße laufen wird. Ferner wird berücksichtigt, dass der Fußgänger 1 in Fig. 1 erst dann nach unten laufen wird, also die Straße überqueren wird, wenn er den Fußgängerüberweg 5 erreicht. Gleichzeitig wird berücksichtigt, dass der Fußgänger 1 die Straße möglichst geradlinig überqueren wird. Ebenso wird berücksichtigt, dass der Fußgänger 1 weiter auf dem Gehweg geradeaus laufen kann, zunächst zum Punkt A und dann zum Punkt C, wobei dort die Verpflanzungen 4 auf dem Gehweg berücksichtigt werden.

Wie ersichtlich ist, führen die Wege zu A, B und C zunächst über dasselbe Stück Gehsteig (fünf Zellen nach links in Fig. 1). Innerhalb dieses Stückes Gehsteig wird der Fußgänger aufgrund einer mangelnden Überquerungsmöglichkeit die Straße nicht überqueren. Gleichzeitig ist er durch das auf seiner Seite parkende Fahrzeug und die Vorgabe des Gehwegs in der Wahl seines Weges in "Querrichtung" beschränkt, er muss also zunächst geradeaus laufen, wenn er zu den Punkten A, B oder C möchte. Bei der Bestimmung der Belegungswahrscheinlichkeiten wird von Zelle zu Zelle vorgegangen und die semantischen Informationen und die Belegungen durch andere Objekte berücksichtigt. Auf diese Weise entstehen schlussendlich Wege, die zu A, B, C oder D führen. Für die Ziele A, B und C mussten für die Gruppe 6 an Zellen keine separaten Trajektorien berechnet werden. Wie direkt einsichtig ist, sind die Belegungswahrscheinlichkeiten in den ersten zwei Zellen in Blickrichtung des Fußgängers höher als nach der Verzweigung zu Punkt D.

Bei der Bestimmung der Wahrscheinlichkeiten wird ferner berücksichtigt aus welcher Richtung der Fußgänger kam, in dem Beispiel von Fig. 1 kam der Fußgänger von rechts, was anhand der Blickrichtung bestimmt wird. Ferner werden in Fig. 1 unterschiedliche Laufgeschwindigkeiten des Fußgängers berücksichtigt, wodurch ganze Pfade ersichtlich werden.

## Patentansprüche

1. Verfahren zur Vorhersage der Position eines Objekts (1) im Umfeld eines Fahrzeugs (4), umfassend:
Bereitstellen eines ersten Rasters, umfassend Zellen, die jeweils einen Abschnitt des Umfelds repräsentieren;
Bestimmen der Wahrscheinlichkeit für jede Zelle des ersten Rasters, dass sich das Objekt oder ein Teil davon in dem Abschnitt des Umfelds befindet, der durch die jeweilige Zelle repräsentiert wird;
Bereitstellen eines zweiten Rasters, umfassend Zellen, die jeweils einen Abschnitt des Umfelds repräsentieren;
Bestimmen der Wahrscheinlichkeit für jede Zelle des zweiten Rasters, dass sich das Objekt (1) oder ein Teil davon zu einem vorbestimmten Zeitpunkt in der Zukunft in dem Abschnitt des Umfelds befinden wird, der durch die jeweilige Zelle repräsentiert wird;
**dadurch gekennzeichnet, dass**
bei der Bestimmung der Wahrscheinlichkeiten für jede Zelle des zweiten Rasters verschiedene Hypothesen zum weiteren Bewegungsverlauf des Objekts (1) berücksichtigt werden; wobei bei dieser Bestimmung der Wahrscheinlichkeiten verschiedene Hypothesen gemeinsam berücksichtigt werden.

2. Verfahren nach Anspruch 1, wobei das Bestimmen der Wahrscheinlichkeit für jede Zelle des zweiten Rasters eines oder mehrere der Folgenden berücksichtigt: die bisherige Bewegung des Objektes (1); andere Objekte (2, 3) im Umfeld des Fahrzeugs (4) und deren vorhergesagte Bewegung; semantische Informationen von anderen Objekten (2, 3) im Umfeld des Fahrzeugs (4).

3. Verfahren nach einem der vorhergehenden Ansprüche, ferner umfassend:
Bereitstellen einer Gruppe weiterer Raster, jeweils umfassend Zellen, die jeweils einen Abschnitt des Umfelds repräsentieren;
Zuordnen jeweils eines Zeitpunkts in der Zukunft zu jedem Raster der Gruppe weiterer Raster;
Für jedes Raster der Gruppe weiterer Raster: Bestimmen der Wahrscheinlichkeit für jede Zelle des jeweiligen Rasters, dass sich das Objekt (1) oder ein Teil davon zu dem jeweils zugeordneten Zeitpunkt in dem Abschnitt des Umfelds befinden wird, der durch die jeweilige Zelle repräsentiert wird.

4. Verfahren nach einem der vorherigen Ansprüche zusätzlich zur Vorhersage der Position eines weiteren Objekts im Umfeld eines Fahrzeugs, ferner umfassend:
Bereitstellen eines weiteren ersten Rasters, umfassend Zellen, die jeweils einen Abschnitt des Umfelds repräsentieren;
Bestimmen der Wahrscheinlichkeit für jede Zelle des weiteren ersten Rasters, dass sich das weitere Objekt oder ein Teil davon in dem Abschnitt des Umfelds befindet, der durch die jeweilige Zelle repräsentiert wird;
Bereitstellen eines weiteren zweiten Rasters, umfassend Zellen, die jeweils einen Abschnitt des Umfelds repräsentieren;
Bestimmen der Wahrscheinlichkeit für jede Zelle des weiteren zweiten Rasters, dass sich das weitere Objekt oder ein Teil davon zu einem vorbestimmten Zeitpunkt in der Zukunft in dem Abschnitt des Umfelds befinden wird, der durch die jeweilige Zelle repräsentiert wird.

5. Verfahren nach Anspruch 4, wobei das Bestimmen der Wahrscheinlichkeit für jede Zelle des weiteren zweiten Rasters eines oder mehrere der Folgenden berücksichtigt: die bisherige Bewegung des weiteren Objektes; andere Objekte im Umfeld des Fahrzeugs (4) und deren vorhergesagte Bewegung; semantische Informationen von anderen Objekten im Umfeld des Fahrzeugs (4).

6. Verfahren nach einem der Ansprüche 4 oder 5, ferner umfassend:
Bereitstellen einer zweiten Gruppe weiterer Raster, jeweils umfassend Zellen, die jeweils einen Abschnitt des Umfelds repräsentieren;
Zuordnen jeweils eines Zeitpunkts in der Zukunft zu jedem Raster der zweiten Gruppe weiterer Raster;
Für jedes Raster der zweiten Gruppe weiterer Raster: Bestimmen der Wahrscheinlichkeit für jede Zelle des jeweiligen Rasters, dass sich das weitere Objekt oder ein Teil davon zu dem jeweils zugeordneten Zeitpunkt in dem Abschnitt des Umfelds befinden wird, der durch die jeweilige Zelle repräsentiert wird.

7. Verfahren nach einem der Ansprüche 1 bis 3 zusätzlich zur Vorhersage der Position eines weiteren Objekts im Umfeld eines Fahrzeugs (4), ferner umfassend:
Bestimmen der Wahrscheinlichkeit für jede Zelle des ersten Rasters, dass sich das weitere Objekt oder ein Teil davon in dem Abschnitt des Umfelds befindet, der durch die jeweilige Zelle repräsentiert wird;
Bestimmen der Wahrscheinlichkeit für jede Zelle des zweiten Rasters, dass sich das weitere Objekt oder ein Teil davon zu einem vorbestimmten Zeitpunkt in der Zukunft in dem Abschnitt des Umfelds befinden wird, der durch die jeweilige Zelle repräsentiert wird.

8. Verfahren nach Anspruch 7, wobei das Bestimmen der Wahrscheinlichkeit für jede Zelle des zweiten Rasters, dass sich das weitere Objekt oder ein Teil davon zu einem vorbestimmten Zeitpunkt in der Zukunft in dem Abschnitt des Umfelds befinden wird eines oder mehrere der Folgenden berücksichtigt: die bisherige Bewegung des weiteren Objektes; andere Objekte im Umfeld des Fahrzeugs (4) und deren vorhergesagte Bewegung; semantische Informationen von anderen Objekten im Umfeld des Fahrzeugs (4).

9. Verfahren nach Anspruch 7 im Rückbezug auf Anspruch 3, ferner umfassend:
Für jedes Raster der Gruppe weiterer Raster: Bestimmen der Wahrscheinlichkeit für jede Zelle des jeweiligen Rasters, dass sich das weitere Objekt oder ein Teil davon zu dem jeweils zugeordneten Zeitpunkt in dem Abschnitt des Umfelds befinden wird, der durch die jeweilige Zelle repräsentiert wird.

10. Verfahren nach einem der Ansprüche 4 bis 6 in Kombination mit einem Verfahren nach einem der Ansprüche 7 bis 9, wobei das Objekt und das weitere Objekt in dem Verfahren nach einem der Ansprüche 4 bis 6 einer ersten Klasse von Verkehrsteilnehmern angehören und das Objekt und das weitere Objekt in dem Verfahren nach einem der Ansprüche 7 bis 9 einer zweiten Klasse von Verkehrsteilnehmern angehören.

11. Verfahren zur Vorhersage der Position eines Objekts (1) im Umfeld eines Fahrzeugs (4), umfassend:
Bereitstellen eines Rasters, umfassend Zellen, die jeweils einen Abschnitt des Umfelds repräsentieren;
Bestimmen der aktuellen Wahrscheinlichkeit für jede Zelle des Rasters, dass sich das Objekt (1) oder ein Teil davon in dem Abschnitt des Umfelds befindet, der durch die jeweilige Zelle repräsentiert wird;
Bestimmen der zukünftigen Wahrscheinlichkeit für jede Zelle des Rasters, dass sich das Objekt (1) oder ein Teil davon zu einem vorbestimmten Zeitpunkt in der Zukunft in dem Abschnitt des Umfelds befinden wird, der durch die jeweilige Zelle repräsentiert wird;
Für mindestens eine Zelle des Rasters:
Bereitstellen eines Vektors, der die aktuelle Wahrscheinlichkeit und die zukünftige Wahrscheinlichkeit als Elemente enthält.

12. Verfahren nach Anspruch 11, ferner umfassend:
Prüfen, ob die zukünftige Wahrscheinlichkeit größer Null ist;
wobei der Vektor die zukünftige Wahrscheinlichkeit nur dann als Element enthält, wenn die zukünftige Wahrscheinlichkeit größer Null ist.

13. Verfahren nach einem der Ansprüche 11 oder 12, ferner umfassend:
Bestimmen einer Gruppe weiterer Wahrscheinlichkeiten für jede Zelle des Rasters, wobei jede Wahrscheinlichkeit der Gruppe, die Wahrscheinlichkeit angibt, dass sich das Objekt oder ein Teil davon zu einem Zeitpunkt aus einer Gruppe von Zeitpunkten in der Zukunft in dem Abschnitt des Umfelds befinden wird, der durch die jeweilige Zelle repräsentiert wird;
Für mindestens eine Zelle des Rasters:
Bereitstellen eines Vektors, der zusätzlich die weiteren Wahrscheinlichkeiten enthält.

14. Vorrichtung, umfassend eine elektronische Recheneinheit, wobei die Vorrichtung dazu eingerichtet ist, ein Verfahren nach einem der Ansprüche 1 bis 13 auszuführen.

15. Computerprogramm, umfassend Anweisungen zum Ausführen eines Verfahrens nach einem der Ansprüche 1 bis 13.

## Claims

1. A method for predicting the position of an object (1) in the environment of a vehicle (4), said method comprising the following steps:
providing a first grid, which comprises cells that each represent a portion of the environment;
for each cell of the first grid, determining the probability that the object or part thereof is located in the portion of the environment represented by the cell in question;
- providing a second grid, which comprises cells that each represent a portion of the environment;
for each cell of the second grid, determining the probability that the object (1) or part thereof will be located in the portion of the environment represented by the cell in question at a predetermined time in the future;
**characterised in that**
when determining the probabilities for each cell of the second grid, various hypotheses regarding the further course of movement of the object (1) are taken into consideration, wherein various hypotheses are taken into consideration jointly when determining the probabilities.

2. A method according to claim 1, wherein the determination of the probability for each cell of the second grid takes into consideration one or more of the following: the previous movement of the object (1); other objects (2, 3) in the environment of the vehicle (4) and the predicted movement thereof; semantic information of other objects (2, 3) in the environment of the vehicle (4).

3. A method according to either one of the preceding claims, further comprising the following steps:
providing a group of further grids, which each comprise cells that each represent a portion of the environment;
associating each grid of the group of further grids with a time in the future;
for each grid of the group of further grids: determining the probability for each cell of the grid in question that the object (1) or part thereof will be located at the corresponding associated time in the portion of the environment represented by the cell in question.

4. A method according to any one of the preceding claims additionally for predicting the position of a further object in the environment of a vehicle, said method further comprising the following steps:
providing a further first grid, which comprises cells that each represent a portion of the environment;
for each cell of the further first grid, determining the probability that the further object or part thereof is located in the portion of the environment represented by the cell in question;
providing a further second grid, which comprises cells that each represent a portion of the environment;
for each cell of the further second grid, determining the probability that a further object or part thereof will be located in the portion of the environment represented by the cell in question at a predetermined time in the future.

5. A method according to claim 4, wherein the determination of the probability for each cell of the further second grid takes into consideration one or more of the following: the previous movement of the further objects; other objects in the environment of the vehicle (4) and the predicted movement thereof; semantic information of other objects in the environment of the vehicle (4).

6. A method according to either one of claims 4 or 5, further comprising the following steps:
providing a second group of further grids, which each comprise cells that each represent a portion of the environment;
associating each grid of the second group of further grids with a time in the future;
for each grid of the second group of further grids: determining the probability for each cell of the grid in question that the further object or part thereof will be located at the corresponding associated time in the portion of the environment represented by the cell in question.

7. A method according to any one of claims 1 to 3 additionally for predicting the position of a further object in the environment of a vehicle (4), said method further comprising the following steps:
determining the probability for each cell of the first grid that the further object or part thereof is located in the portion of the environment represented by the cell in question;
determining the probability for each cell of the second grid that the further object or part thereof will be located in the portion of the environment represented by the cell in question at a predetermined time in the future.

8. A method according to claim 7, wherein the determination of the probability for each cell of the second grid that the further object or part thereof will be located in the portion of the environment at a predetermined time in the future takes into consideration one or more of the following: the previous movement of the further object; other objects in the environment of the vehicle (4) and the predicted movement thereof; semantic information of other objects in the environment of the vehicle (4).

9. A method according to claim 7 in dependence on claim 3, said method further comprising the following step:
for each grid of the group of further grids: determining the probability for each cell of the grid in question that the further object or part thereof will be located in the portion of the environment represented by the cell in question at the corresponding associated time.

10. A method according to any one of claims 4 to 6 in combination with a method according to any one of claims 7 to 9, wherein the object and the further object in the method according to any one of claims 4 to 6 belong to a first class of road users and the object and the further object in the method according to any one of claims 7 to 9 belong to a second class of road users.

11. A method for predicting the position of an object (1) in the environment of a vehicle (4), said method comprising the following steps:
providing a grid, which comprises cells that each represent a portion of the environment;
determining the current probability for each cell of the grid that the object (1) or part thereof is located in the portion of the environment represented by the cell in question;
determining the future probability for each cell of the grid that the object (1) or part thereof will be located in the portion of the environment represented by the cell in question at a predetermined time in the future;
for at least one cell of the grid:
providing a vector, which contains the current probability and the future probability as elements.

12. A method according to claim 11, further comprising the following step:
checking whether the future probability is greater than zero;
wherein the vector contains the future probability as an element only if the future probability is greater than zero.

13. A method according to either one of claims 11 or 12, further comprising the following steps:
for each cell of the grid, determining a group of further probabilities, wherein each probability of the group specifies the probability that the object or part thereof will be located in the portion of the environment represented by the cell in question at a time from a group of times in the future;
for at least one cell of the grid:
providing a vector, which additionally contains the further probabilities.

14. A device, comprising an electronic computing unit, wherein the device is designed to carry out a method according to any one of claims 1 to 13.

15. A computer program, comprising instructions for carrying out a method according to any one of claims 1 to 13.

## Revendications

1. Procédé permettant de prévoir la position d'un objet (1) dans l'environnement d'un véhicule (4) comprenant des étapes consistant à :
se procurer une première grille comprenant des cellules qui représentent chacune un segment de l'environnement,
déterminer pour chaque cellule de la première grille la probabilité pour que l'objet ou une partie de l'objet se trouve dans le segment de l'environnement qui est représenté par la cellule respective,
se procurer une seconde grille comprenant des cellules qui représentent chacune un segment de l'environnement,
déterminer pour chaque cellule de la seconde grille la probabilité pour que l'objet (1) ou une partie de cet objet se trouve à un temps prédéfini dans le futur dans le segment de l'environnement qui est représenté par la cellule respective,
**caractérisé en ce que**
lors de la détermination de la probabilité, pour chaque cellule de la seconde grille différentes hypothèses pour la poursuite du déroulement du déplacement de l'objet (1) sont prises en considération, lors de cette détermination des probabilités, différentes hypothèses étant prises en considération en commun.

2. Procédé conforme à la revendication 1,
selon lequel la détermination de la probabilité pour chaque cellule de la seconde grille prend en considération au moins l'un des éléments suivants : le déplacement antérieur de l'objet (1), la présence d'autres objets (2, 3) dans l'environnement du véhicule (4) et leur déplacement prévu, des informations sémantiques d'autres objets (2, 3) situés dans l'environnement du véhicule (4).

3. Procédé conforme à l'une des revendications précédentes, comprenant en outre des étapes consistant à :
se procurer un groupe d'autres grilles comprenant chacune des cellules qui représentent respectivement un segment de l'environnement,
associer respectivement un temps dans le futur à chaque grille du groupe d'autres grilles,
pour chacune des grilles du groupe d'autres grilles déterminer pour chaque cellules de la grille respective la probabilité pour que l'objet (1) ou une partie de cet objet se trouve au temps associé respectif dans le segment de l'environnement qui est représenté par la cellule respective.

4. Procédé conforme à l'une des revendications précédentes, permettant en outre de prévoir la position d'un autre objet dans l'environnement d'un véhicule comprenant en outre des étapes consistant à :
se procurer une autre première grille comprenant des cellules qui représentent chacune un segment de l'environnement,
déterminer pour chaque cellule de l'autre première grille la probabilité pour que l'autre objet ou une partie de cet autre objet se trouve dans le segment de l'environnement qui est représenté par la cellule respective,
se procurer une autre seconde grille comprenant des cellules qui représentent chacune un segment de l'environnement,
déterminer pour chaque cellule de l'autre seconde grille la probabilité pour que l'autre objet ou une partie de cet autre objet se trouve, à un temps prédéfini dans le futur dans le segment de l'environnement qui est représenté par la cellule respective.

5. Procédé conforme à la revendication 4,
selon lequel la détermination de la probabilité, pour chaque cellule de l'autre seconde grille prend en considération au moins l'un des éléments suivants : le déplacement antérieur de l'autre objet, la présence d'autres objets dans l'environnement du véhicule (4) et leur déplacement prévu, des informations sémantiques d'autres objets situés dans l'environnement du véhicule (4).

6. Procédé conforme à l'une des revendications 4 et 5 comprenant en outre des étapes consistant à :
se procurer un second groupe d'autres grilles comprenant chacune des cellules qui représentent respectivement un segment de l'environnement,
associer respectivement un temps dans le futur à chaque grille du second groupe d'autres grilles,
pour chaque grille du second groupe d'autres grilles : déterminer pour chaque cellule de la grille respective la probabilité pour que l'autre objet ou une partie de cet autre objet se trouve au temps associé respectif dans le segment de l'environnement qui est représenté par la cellule respective.

7. Procédé conforme à l'une des revendications 1 à 3, permettant en outre de prévoir la position d'un autre objet dans l'environnement d'un véhicule (4) comprenant en outre des étapes consistant à :
déterminer pour chaque cellule de la première grille la probabilité pour que l'autre objet ou une partie de cet autre objet se trouve dans le segment de l'environnement qui est représenté par la cellule respective,
déterminer pour chaque cellule de la seconde grille la probabilité pour que l'autre objet ou une partie de cet autre objet se trouve à un temps prédéfini dans le futur dans le segment de l'environnement qui est représenté par la cellule respective.

8. Procédé conforme à la revendication 7,
selon lequel pour chaque cellule de la seconde grille, la détermination de la probabilité pour que l'autre objet ou une partie de cet autre objet se trouve à un temps prédéfini dans le futur dans le segment de l'environnement prend en considération au moins l'un des éléments suivants : le mouvement antérieur de l'autre objet, la présence d'autres objets dans l'environnement du véhicule (4) et leur mouvement prévu, des informations sémantiques d'autres objets situés dans l'environnement du véhicule (4).

9. Procédé conforme à la revendication 7 combinée à la revendication 3,
comprenant en outre une étape consistant à :
pour chaque grille du groupe d'autres grilles : déterminer pour chaque cellule de la grille respective la probabilité pour que l'autre objet ou une partie de cet autre objet se trouve, au temps respectivement associé dans le segment de l'environnement qui est représenté par la cellule respective.

10. Procédé conforme à l'une des revendications 4 à 6 en combinaison avec un procédé conforme à l'une des revendications 7 à 9,
selon lequel l'objet et l'autre objet appartiennent, conformément au procédé conforme à l'une des revendications 4 à 6 à une première classe de participants au trafic et conformément au procédé conforme à l'une des revendications 7 à 9 à une seconde classe de participants au trafic.

11. Procédé permettant de prévoir la position d'un objet (1) dans l'environnement d'un véhicule (4) comprenant des étapes consistant à :
se procurer une grille comprenant des cellules qui représentent chacune un segment de l'environnement,
déterminer pour chaque cellule de la grille la probabilité actuelle pour que l'objet (1) ou une partie de cet objet se trouve dans le segment de l'environnement qui est représenté par la cellule respective,
déterminer pour chaque cellule de la grille la probabilité future pour que l'objet (1) ou une partie de cet objet se trouve, à un temps prédéfini dans le futur dans le segment de l'environnement qui est représenté par la cellule respective,
pour au moins une cellule de la grille,
se procurer un vecteur qui renferme en tant qu'éléments la probabilité actuelle et la probabilité future.

12. Procédé conforme à la revendication 11, comprenant en outre une étape consistant à :
vérifier si la probabilité future est supérieure à zéro,
le vecteur ne comprenant la probabilité future en tant qu'élément que lorsque cette probabilité future est supérieure à zéro.

13. Procédé conforme à l'une des revendications 11 et 12, comprenant en outre des étapes consistant à :
déterminer un groupe d'autres probabilités pour chaque cellule de la grille, chaque probabilité du groupe indiquant la probabilité pour que l'objet ou une partie de cet objet se trouve, à un temps parmi un groupe de temps dans le futur dans le segment de l'environnement qui est représenté par la cellule respective,
pour au moins une cellule de la grille,
se procurer un vecteur qui renferme en outre les autres probabilités.

14. Dispositif comprenant une unité de calcul électronique, ce dispositif étant susceptible de mettre en oeuvre un procédé conforme à l'une des revendications 1 à 13.

15. Programme d'ordinateur comprenant des instructions permettant la mise en oeuvre d'un procédé conforme à l'une des revendications 1 à 13.
